# EUROPEAN PATENT APPLICATION

(11) **EP 2 746 230 A1**
(43) Date of publication of application: **25.06.2014**
(21) Application number: 12306604.5
(22) Date of filing: 18.12.2012
(51) Int. Cl.: C02F 1/52, C02F 1/68, C02F 1/56, B01D 17/02, C02F 1/38, C10G 29/00, C02F 1/44, C02F 101/20, C02F 103/10, C02F 103/36

(54) **Process for removing mercury from production water and condensates.**

(71) Applicant: Total SA, 92400 Courbevoie (FR)
(72) Inventor: GARNIER, OLIVIER-FRANÇOIS, 78290 CROISSY S/SEINE (FR); Rondon, Marianna, 64000 Pau (FR); Hurtevent, Christian, 64000 Pau (FR); Jacob, Matthieu, 64170 Cescau (FR); Zhou, Honggang, 64000 Pau (FR)
(74) Representative: Cabinet Plasseraud

(57) **Abstract**

The present invention relates to a process for treating a mercury-containing liquid effluent produced from a gas well, said liquid effluent comprising a mixture of an aqueous phase and liquid condensates, said process comprising the following steps:
a) providing a coagulant able to form hydrophilic aggregates with mercury-containing compounds;
b) contacting said mixture of aqueous phase and liquid condensates with said coagulant, thereby forming hydrophilic mercury-containing aggregates;
c) letting the liquid condensates separate from the aqueous phase by decantation and the mercury-containing aggregates settle within the aqueous phase;
d) recovering the aqueous phase which contains mercury-containing aggregates in one hand and the liquid condensates in the other hand;
e) separating the mercury-containing aggregates from the aqueous phase;
f) recovering the mercury-containing aggregates in one hand and the aqueous phase in the other hand,

as well as the facility thereof.

## Description

### Field of the invention

The invention relates to a process for treating a mercury-containing liquid effluent from a gas well and more particularly for removing mercury from the aqueous phase and from the liquid condensates of said liquid effluent, as well as the facility thereof.

### Background

In some parts of the world, like South Asia, gas fields may comprise high contents of mercury, as well as some hydrogen sulphide (H₂S). Mercury may be present in the form of elemental mercury, but also in the form of particulate mercury, such as mercury sulphide particles (HgS), also named black cinnabar. Mercury sulphide particles could form by reaction of elemental mercury with hydrogen sulphide. This reaction is thermodynamically promoted by the cooling and depressurization occurring during the production of the gas from the well. Mercury presents environmental and safety concerns and thus requires to be removed from the well effluent by downstream processing treatments.

In the case of an offshore gas field, the well effluent undergoes first a preliminary treatment at an offshore central processing facility (CPF) to separate liquids, including water and the condensates from the gas. The condensates are generally pumped to a floating production, storage and offloading (FPSO) facility anchored nearby, from which they will be transferred to tankers for delivery to markets. The gas is transported from the CPF either to a LNG processing plant, where it is cooled to below -161°C (the point at which the gas becomes liquefied natural gas) for transportation by LNG carrier, or directly to a pipeline.

Several forms of mercury may be present in the well effluent: dissolved mercury which includes elemental mercury and organic mercury, and particulate mercury which includes HgS, when hydrogen sulphide (H₂S) is present in the well effluent. Particles of HgC1₂ can also be present. Organic mercury presence is quite rare and most of time elemental mercury is considered to be the predominant dissolved mercury species.

When gas produced from the field undergoes the preliminary treatment at the CPF to remove liquids, most of the elemental mercury goes within the gas phase, according to thermo dynamical equilibrium, from where it can be easily removed, for instance by absorption processes.

However, mercury in its particulate form is more problematic because it goes mainly within the liquid phase and contaminates both the water and the condensates. Thus, the produced water specification with respect to environmental protection regulation may not be met and the concentration of mercury found in said condensates may be such that it is no more marketable. On an indicative basis, the premium price of a condensate (petrochemical market) may be claimed with 5-10 ppbwt of mercury. The price is downgraded if the condensate contains between 10 and 100 ppbwt of mercury. Between 100 and 500 ppbwt, the market becomes very difficult. Above 500 ppbwt, the condensate is no longer marketable.

Hence, when a gas field contains high contents of mercury, as well as hydrogen sulphide, the liquid effluent recovered from the CPF will generally contain a low content of elemental mercury (as elemental mercury mainly goes with the gaseous phase) and possibly a high content of particulate mercury, mostly in the form of HgS or HgCl₂.

The liquid effluent comprises the condensates and an aqueous phase mostly composed of water and possibly dehydration solvents, such as methyl ethyl glycol (MEG) or triethylene glycol (TEG).

In the liquid effluent, elemental mercury mainly dissolves in the condensates, and to lower extend in the aqueous phase.

The condensates may be typically treated with Guard beds by using S-link catalyst such as Cu-S which allows full mercury removal.

Regarding the aqueous phase, it is known to use coagulants or chelating agents, such as thiocarbamates or dithiocarbamates, to remove mercury. Such coagulants form aggregates with mercury by complexation of mercury with sulphur atoms contained in the molecule. The aggregates may be then separated from the aqueous phase by physical separation, such as flotation, filtration, multimedia filtration, ultrafiltration or centrifugation, then compacted and treated to remove and recycle mercury.

In the liquid effluent, particulate mercury disperses both in the condensates and the aqueous phase. Since the size of the particles may be quite low (around 1 or 2µm or below), the removal of these particles by filtration is difficult to implement. Other techniques must thus be considered.

Regarding the aqueous phase, the particulate mercury may be removed in the same way as elemental mercury, i.e. by using coagulants, such as thiocarbamates or dithiocarbamates.

However, with respect to the condensates, the Guard beds containing Cu-S are not satisfactory as HgS particles removal is very low. In fact, the Guard beds act only as a physical barrier and remove small amount of particles.

Therefore, the treatments which allow removal of elemental mercury from liquid effluent of a gas well are generally not suitable for removing particulate mercury.

When a new gas field is discovered, it is difficult to predict what will be the content of HgS particles in the gas effluents. Collecting gas samples from the gas field is very expensive as it requires deep drilling and the results of the samples analysis may vary from one to another. In addition, sampling conditions are different from production ones and the mercury speciation can be widely different.

Therefore, there is need to provide a process and facility that allow removal of both elemental and particulate mercury from liquid effluents of a gas field, whatever the content of mercury in this gas, in particular whatever the content of Hg particles such as HgS.

### Summary of the invention

The invention meets this need by providing a process which is easy to implement and uses well known technologies, such as centrifugation, ultrafiltration or adsorption, as well as commercially available coagulants and flocculants. The process of the invention ensures a specification of less than 20 ppbwt of mercury for the produced water and less than 10 ppbwt of mercury for the condensates, whatever is the speciation between the two species of mercury (elemental or particulate). It may be used offshore where space is limited, in particular on a FPSO facility. It allows concentration of the removed mercury into a residue which is easy to handle and may be transferred to an onshore treatment unit.

According to the invention, a mercury coagulant is injected into the mixture of aqueous phase and condensates before the step which consists into separating the condensates from the aqueous phase, so that all the mercury particles are concentrated into the aqueous phase in the form of aggregates which are then easy to remove.

Unless otherwise specified, the mercury contents are expressed in ppbwt, i.e. part by weight per billion (10⁻⁹). The coagulant and flocculant dosage are expressed in ppm, i.e. part by volume per million (10⁻⁶).

One object of the present invention is a process for treating a mercury-containing liquid effluent produced from a gas well, said liquid effluent comprising a mixture of an aqueous phase and liquid condensates, said process comprising the following steps:
a) providing a coagulant able to form hydrophilic aggregates with mercury-containing compounds;
b) contacting said mixture of aqueous phase and liquid condensates with said coagulant, thereby forming hydrophilic mercury-containing aggregates;
c) letting the liquid condensates separate from the aqueous phase by decantation and the mercury-containing aggregates settle within the aqueous phase;
d) recovering the aqueous phase which contains mercury-containing aggregates in one hand and the liquid condensates in the other hand;
e) separating the mercury-containing aggregates from the aqueous phase;
f) recovering the mercury-containing aggregates in one hand and the aqueous phase in the other hand.

In one embodiment, the mercury-containing liquid effluent contains up to 3000 ppbwt of mercury, including from 50 to 200 ppbwt of elemental mercury and from 1000 to 2950 ppbwt of particulate mercury.

In one embodiment, step c) is performed in one or several separator(s) connected in series, thereby recovering one or several aqueous phase(s), one or several liquid condensates, and/or one or several gaseous hydrocarbon stream(s) comprising hydrocarbons, mercury particles and elemental mercury.

In one embodiment, the coagulants able to form hydrophilic aggregates with mercury-containing compounds are water soluble polymers containing a functional group capable of scavenging a mercury-containing compound.

In a particular embodiment, the coagulant is an organosulfur compound, such as a thiol, preferably a dithiol or a trithiol, a thioester, a thioether, a thioacetal, a disulfide, a polysulfide, a sulfoxide, a thiosulfimide, a thioamine or a thionitrile. The coagulant is preferably selected from the group consisting of water soluble polymers containing at least one thiocarbamate group or one dithiocarbamate group.

In one embodiment, the amount of coagulant put into contact with the mixture of aqueous phase and liquid condensates is from 10 to 200 ppm.

In one embodiment, the coagulant and a flocculant are further contacted with the one or several aqueous phase(s) recovered from step c).

In one embodiment, the process of the invention further comprises the recovery and mercury removal treatment of the gaseous hydrocarbon stream(s), thereby recovering a treated gaseous hydrocarbon stream comprising less than 10 ppbwt of mercury in any form (elemental or particulate), in particular less than 5 ppbwt of mercury in any form.

In one embodiment, the aqueous phase recovered at step f) contains less than 20 ppbwt of mercury in any form (elemental or particulate), in particular less than 10 ppbwt of mercury in any form.
In one embodiment, the aqueous phase comprises dehydration solvents, such as methyl ethyl glycol or triethylene glycol.

In one embodiment, the process further comprises the drying of the mercury-containing aggregates recovered at step f) into a mercury-concentrated dry residue, in particular by precoat filtration with dry extraction of the cake or by press filter or by centrifugation. In one embodiment, the process further comprises the removal of dissolved hydrocarbons contained in the aqueous phase(s) recovered at step f), followed by precipitation of salts, thereby recovering a treated aqueous phase containing less than 20 ppbwt of mercury in any form (elemental or particulate), in particular less than 10 ppbwt of mercury in any form.

In one embodiment, when the aqueous phase comprises dehydration solvents, the process further comprises a step of regeneration of said dehydration solvents from the treated aqueous phase.

In one embodiment, the process further comprises the mercury removal treatment of the liquid condensates recovered at step d), in particular by contacting said liquid condensates with a mercury adsorbent, preferably with a macro porous alumina supported metal sulphide, thereby recovering treated liquid condensates containing less than 10 ppbwt of mercury in any form (elemental or particulate), in particular less than 5 ppbwt of mercury in any form.

Another object of the present invention is a facility for treating a mercury-containing liquid effluent from a gas well, said liquid effluent comprising a mixture of an aqueous phase and liquid condensates, said facility comprising:
a) a supply line (1) for the mixture of aqueous phase and liquid condensates;
b) a reservoir (2) containing a coagulant able to form hydrophilic aggregates with mercury-containing compounds;
c) one or several separator(s) (4a, 4b, 4c, 4d, 25) in series, having a filling line (5a, 5b, 5c, 27) for the recovery of an aqueous phase comprising aggregates, a filling line (6a, 6b, 6c, 6d, 26) for the recovery of liquid condensates, and a filling line (31a, 31b, 31c, 31d) for the recovery of a gaseous hydrocarbon stream comprising hydrocarbons and mercury, one separator being fed with the supply line (1), the other separators being fed with a liquid condensates filling line (6a, 6b, 6c, 6d, 26);
d) a supply line (3a) for the coagulant connected to the supply line (1) and possibly a supply line (3b) for the coagulant connected to at least one of the filling lines (5a, 5b, 5c, 27) ;
e) a separation system (7) fed with filling line (5a, 5b, 5c, 27) wherein an aqueous phase is separated from the aggregates, said aqueous phase exiting by a line 8a, and said aggregates exiting by a line 9.

In one embodiment, the reservoir (2) further comprises a flocculant and a supply line (3b) for the coagulant and flocculant connected to at least one of the filling lines (5a, 5b, 5c, 27).

In one embodiment, the facility further comprises a mercury removal treatment unit fed with filling lines (31a, 31b, 31c, 31d).

In one embodiment, the facility further comprises a separation unit (10), such as a precoat filtration unit, fed with line 9 wherein an aqueous phase is separated from a dry residue, said dry residue exiting by a line 11 and said aqueous phase exiting by a line 12.

In one embodiment, the facility further comprises a separator (13), such as a flash drum, fed with lines 8 and 12, wherein gaseous hydrocarbons are separated from an aqueous phase, said gaseous hydrocarbons exiting by a line 14 and said aqueous phase exiting by a line 15.

In one embodiment, the facility further comprises a mercury removal treatment unit (22a, 22b) comprising a mercury adsorbent, such as a macro porous alumina supported metal sulphide, fed with the liquid condensates filling line (6d), from which a treated liquid condensates exit by line (23).

### Brief description of the figures

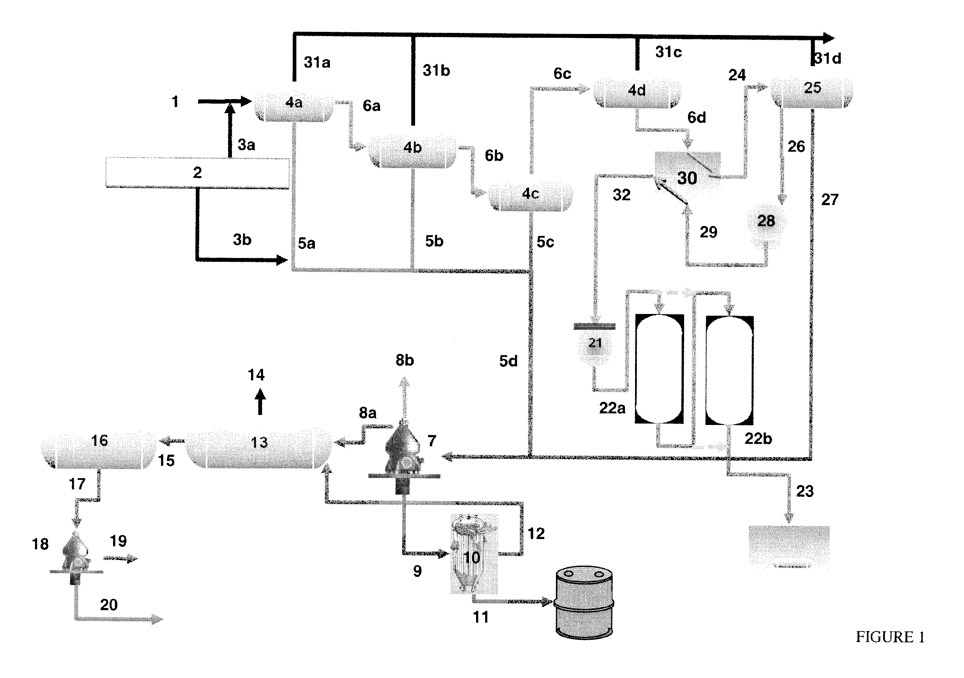

Figure 1 is a schematic representation of the process and installation of the invention.

### Detailed description of the invention

The process of the invention allows the treatment of a liquid effluent containing high contents of both elemental mercury and particulate mercury, particularly liquid effluents containing up to 3000 ppbwt of mercury, including from 50 to 200 ppbwt of elemental mercury and from 1000 to 2950 ppbwt of particulate mercury (Hg weight concentration).

The process of the invention can be performed onsite at well locations, such as offshore platforms with limited space and facilities, prior to transport to refineries. Advantageously, it can be performed on a floating production, storage and offloading (FPSO) facility anchored nearby the well.

According to the invention, a mercury coagulant is injected into the mixture of aqueous phase and condensates before separating the condensates from the aqueous phase, so that all mercury particles are concentrated into the aqueous phase in the form of aggregates which are then easy to remove by physical separation.

The coagulant utilized in the process of the invention must be capable to form hydrophilic aggregates with mercury-containing compounds, in particular with elemental mercury and HgS particles, or with mercury in any other forms as HgCl₂. Such coagulants are well known by the person skilled in the art.

It is understood that the present invention is not limited to a coagulant as long as it is able to form hydrophilic aggregates with mercury compounds. By "hydrophilic", it is meant that the aggregate has an affinity for water, so that when in presence of an aqueous phase and condensates, the aggregates concentrate essentially into the aqueous phase. The aggregates are hydrophilic but insoluble in water. As a result, the aggregates settle in the aqueous phase through sedimentation and may be then easily separated from the aqueous phase by filtration or flotation or centrifugation, as detailed hereafter.

In one embodiment, the coagulant is a water soluble polymer containing a functional group capable of scavenging a mercury-containing compound. The scavenging group may be for instance a thiol, preferably a dithiol or a trithiol, a thiosester, a thioether, a thioacetal, a disulfide, a polysulfide, a sulfoxide, a thiosulfimide, a thioamine or a thionitrile. The coagulant is preferably selected from the group consisting of water soluble polymers containing at least one thiocarbamate group or at least one dithiocarbamate group.

For instance, water soluble polymers containing a dithiocarbamate functional group include, but are not limited to: Nalmet 1689, Nalmet 8701, Nalmet 8702, EC6036A, 02VF112, 03VC057 (marketed by NALCO), GE ME 2405 and 2408 (marketed by GE waters).

The amount of coagulant added to the mixture depends on the type of coagulant and the concentration of mercury compounds contained in the aqueous phase. In one embodiment, the amount of coagulant added to the mixture is around 20 times the concentration of mercury (for instance in the case of a dithiocarbamate). The amount may be from 10 to 200 ppm, in particular from 30 to 100 ppm.

A flocculant may be added to the aqueous phase after the separation of the condensates from the aqueous phase in order to promote the formation of aggregates. The amount of flocculant added to the aqueous phase depends on the type of flocculant and the concentration of mercury compounds contained in the aqueous phase. In one embodiment, the amount of flocculant may be comprised between 1 and 10 ppm, in particular around 5 ppm. Flocculants are well known by the person skilled in the art. For instance, suitable flocculants include, but are not limited to: ammonium sulfate, such as EC6029A (marketed by NALCO) or Iron (III) chloride FeCl₃.

Figure 1 illustrates a process and facility according to the invention.
With reference to figure 1, a mixture of aqueous phase and liquid condensates removed from a well is fed to the system through a supply line 1. The aqueous phase is mostly composed of water and dehydration solvents, such as methyl ethyl glycol (MEG) or triethylene glycol (TEG). A reservoir 2 containing the coagulant is connected to supply line 1 by line 3a, thereby allowing the injection of the coagulant into the mixture of aqueous phase and condensates. The mixture supplemented with the coagulant is then fed into a separator 4a (intermediate pressure) and allowed to settle until the aqueous phase and the condensates separate inside the separator. At the same time, the aggregates are allowed to settle within the aqueous phase. Typically, the content of the separator is allowed to settle from 5 to 15 min. In the separator 4a, the pressure is from 100 MPa to 200 MPa, preferably from 150 MPa and 160 MPa, and the temperature is from 60 to 100 °C, preferably from 80 to 90 °C. Under these conditions, some hydrocarbons and mercury dissolved in the mixture separate from the liquid mixture in the form of a gaseous stream which is recovered by filling line 31a. The gas stream in line 31a contains around 200 ppbwt of mercury. It is then passed to a flash gas compressor (not represented) and sent to a mercury removal treatment unit (not represented). The aqueous phase which contains the mercury-containing aggregates is recovered by filling line 5a. The liquid condensates are recovered by filling line 6a. The reservoir 2 also contains a flocculant and is connected to lines 5a, 5b and 5c by line 3b for injecting the coagulant and flocculant into the aqueous phase recovered in lines 5a, 5b, 5c.

In one embodiment, step c) is performed in one or several separator(s) connected in series, thereby recovering one or several aqueous phase(s) 5a, 5b, 5c, one or several liquid condensates 6a, 6b, 6c, 6d, and possibly one or several gaseous hydrocarbon stream(s) comprising hydrocarbons and mercury 31a, 31b, 31c, 31d. In that case, the liquid condensates recovered by filling line 6a are fed into a separator 4b (medium pressure) and allowed to settle until an aqueous phase separates from the condensates inside the separator typically from 5 to 15 min. In the separator 4b, the pressure is from 100 MPa to 150 MPa, preferably from 110 MPa and 130 MPa, and the temperature is from 60 to 100 °C, preferably from 80 to 90 °C. Under these conditions, some hydrocarbons and mercury dissolved in the mixture, separate from the liquid mixture in the form of a gaseous stream which is recovered by filling line 31b. The gas stream in line 31b contains from 500 ppwt to 700 ppwt of mercury. It is gathered to line 31a and thus passed to a flash gas compressor (not represented) and sent to a mercury removal treatment unit (not represented), as described previously. An aqueous phase is recovered by filling line 5b and gathered to line 5a. Aqueous phase 5b may still contain some mercury-containing aggregates. Liquid condensates are recovered by filling line 6b and fed into a separator 4c (medium-low pressure) where it is allowed to settle until an aqueous phase separates from the liquid condensates inside the separator typically from 5 to 15 min. In the separator 4c, the pressure is from 100 MPa to 150 MPa, preferably from 110 MPa and 130 MPa, and the temperature is from 60 to 100 °C, preferably from 80 to 90 °C. Under these conditions, there is no gaseous stream separating from the liquid mixture. The aqueous phase is recovered by filling line 5c and gathered to lines 5a and 5b. Aqueous phase 5c may still contain some mercury-containing aggregates. The liquid condensates are recovered by filling line 6c and fed into the separator 4d. At this point, the liquid condensates are free of any aqueous phase. In the separator (low pressure) 4d, the pressure is from 30 MPa to 60 MPa, preferably from 40 MPa and 45 MPa, and the temperature is from 60 to 100 °C, preferably from 80 to 90 °C. Under these conditions, some hydrocarbons and dissolved mercury evaporate and are recovered by filling line 31c. The gas stream in line 31c contains from 1000 to 1200 ppbwt of mercury. It is gathered to lines 31a and 31b and thus passed to a flash gas compressor (not represented) and sent to a mercury removal treatment unit (not represented), as described previously. The liquid condensates are recovered by filling line 6d and are heated by passing through a heat exchanger 30 up to a temperature from 80 to 100 °C, preferably from 90 to 100 °C. The heated stream 24 is then passed though a separator 25 from which some hydrocarbons and dissolved mercury evaporated and are recovered in line 31d. Liquid condensates are recovered by filling line 26, pumped by a pump 28. Condensates flow 29 are cooled down by heat exchanger 30 and the downcoming flow 32 is passed through a filtration unit 21 and then fed into a mercury removal unit 22a, 22b comprising a mercury adsorbent, such as a macro alumina supported metal sulphide, in order to recover treated liquid condensates into line 23. At this point, the treated condensates contain less than 10 ppbwt of mercury in any form (elemental or particulate), in particular less than 5 ppbwt of mercury in any form. It includes hydrocarbons from ethane to Dodecane (C2 to C12 alkanes) and may be transferred to tankers for delivery to markets.

The aqueous phases recovered in filling lines 5a, 5b, 5c are gathered in line 5d. The aqueous phases in line 5d and 27 are once again contacted with the flocculent and coagulant by line 3b and then gathered and fed into a physical separator 7 in order to recover the mercury-containing aggregates in one hand and the aqueous phase in the other hand. The separation may be performed by various techniques, such as ultrafiltration, flotation or centrifugation. Centrifugation is preferred for an offshore application as it allows the best compromise between efficiency, purge stream and footprint/weight of the installation. If the process is performed onshore, ultrafiltration may be more advantageous for maintenance reasons. Flotation may be used but the separation efficiency may not be sufficient to meet mercury specifications. The mercury-containing aggregates recovered from separator 7 are recovered by line 9 and fed into a separation unit 10, preferably by precoat filtration with dry extraction of the cake or press filtration or centrifugation. A mercury-concentrated dry residue is recovered by line 11, compacted and may be then sent onshore for further treatment. An aqueous phase is recovered from the drying unit 10 by line 12 and fed into a separator 13, such as flash drum, wherein dissolved hydrocarbons are removed from the aqueous phase and recovered by line 14. An aqueous phase is recovered from separator 7 by line 8a and fed into a separator 13. Some liquid hydrocarbon phase containing light hydrocarbons is recovered from separator 7 with the line 8b. At this point, the aqueous phases in line 8a and 12 are mostly composed of water, salts, and dehydration solvents, such as methyl ethyl glycol or triethylene glycol, and contain less than 20 ppbwt of mercury in any form (elemental or particulate), in particular less than 10 ppbwt of mercury in any form. An aqueous phase is recovered from separator 13 by line 15. The divalent salts contained in said aqueous phase are precipitated for instance by adding NaOH and separated in a pre-treatment drum 16. An aqueous phase containing dehydration solvents, such as methyl ethyl glycol (MEG) or triethylene glycol (TEG), is recovered from pre-treatment drum 16 by line 17 and fed into separator 18. An aqueous phase enriched in dehydration solvents is recovered from separator 18 by line 19 and sent to a regeneration unit (not represented) in order to recover the dehydration solvents. After regeneration, the dehydration solvents may be sent back to injection in the well. A salt-containing slurry is recovered from separator 18 by line 20, and comprises less than 20 ppwt of mercury. Thus, it may be released into the sea.

The invention will now be further described in the following examples. These examples are offered to illustrate the invention and should in no way be viewed as limiting the invention.

### Example 1

A mixture of aqueous phase and liquid condensates removed from a well is treated according to the process of figure 1 with the same conditions as described above. Said mixture contains 170 ppbwt of elemental mercury and 20 ppbwt of particulate mercury. After treatment with a coagulant and a flocculant and separation of the aqueous phases from the liquid condensates in separators 4a, 4b and 4c, the aqueous phase recovered in line 5d contains 300 ppbwt of particulate mercury. The recovered condensates recovered after the filtration unit 21 and before the mercury removal unit 22a, 22b contain 234 ppbwt of elemental mercury. After mercury removal treatment, the treated liquid condensates recovered in line 23 contain less than 5 ppbwt of elemental mercury. After treatment of the aqueous phase recovered in lines 5d and 27 with a flocculant and coagulant and separating said aqueous phase from the mercury-containing aggregates, the aqueous phase recovered at the exit of separator 13 contains less than 20 ppbwt of particulate mercury.

### Example 2

A mixture of aqueous phase and liquid condensates removed from a well is treated according to the process of figure 1 with the same conditions as described above. Said mixture contains 20 ppbwt of elemental mercury and 170 ppbwt of particulate mercury. After treatment with a coagulant and a flocculant and separation of the aqueous phases from the liquid condensates in separators 4a, 4b and 4c, the aqueous phase recovered in line 5d contains 2500 ppbwt of particulate mercury. The recovered condensates recovered after the filtration unit 21 and before the mercury removal unit 22a, 22b contain 30 ppbwt of elemental mercury. After mercury removal treatment, the treated liquid condensates recovered in line 23 contain less than 5 ppbwt of elemental mercury. After treatment of the aqueous phase recovered in lines 5d and 27 with a flocculant and coagulant and separating said aqueous phase from the mercury-containing aggregates, the aqueous phase recovered at the exit of separator 13 contains less than 20 ppbwt of particulate mercury.

Examples 1 and 2 show that the process of the invention ensures a specification of less than 20 ppbwt of mercury for the produced water and less than 5 ppbwt of mercury for the condensates, whatever is the speciation between the two species of mercury (elemental or particulate).

## Claims

1. A process for treating a mercury-containing liquid effluent produced from a gas well, said liquid effluent comprising a mixture of an aqueous phase and liquid condensates, said process comprising the following steps:
a) providing a coagulant able to form hydrophilic aggregates with mercury-containing compounds;
b) contacting said mixture of aqueous phase and liquid condensates with said coagulant, thereby forming hydrophilic mercury-containing aggregates;
c) letting the liquid condensates separate from the aqueous phase by decantation and the mercury-containing aggregates settle within the aqueous phase;
d) recovering the aqueous phase which contains mercury-containing aggregates in one hand and the liquid condensates in the other hand;
e) separating the mercury-containing aggregates from the aqueous phase;
f) recovering the mercury-containing aggregates in one hand and the aqueous phase in the other hand.

2. The process according to claim 1, wherein the mercury-containing liquid effluent contains up to 3000 ppbwt of mercury, including from 50 to 200 ppbwt of elemental mercury and from 1000 to 2950 ppbwt of particulate mercury.

3. The process according to claims 1 or 2, wherein step c) is performed in one or several separator(s) connected in series, thereby recovering one or several aqueous phase(s), one or several liquid condensates, and/or one or several gaseous hydrocarbon stream(s) comprising hydrocarbons and mercury.

4. The process according to any one of claims 1 to 3, wherein the coagulant able to form hydrophilic aggregates with mercury-containing compounds is a water soluble polymer containing a functional group capable of scavenging a mercury-containing compound, in particular an organosulfur compound such as a thiol, preferably a dithiol or a trithiol, a thioester, a thioether, a thioacetal, a disulfide, a polysulfide, a sulfoxide, a thiosulfimide, a thioamine or a thionitrile.

5. The process according to any one of claims 1 to 4, wherein the coagulant is selected from the group consisting of water soluble polymers containing at least one thiocarbamate group or at least one dithiocarbamate group.

6. The process according to any one of claims 1 to 5, wherein the amount of coagulant put into contact with the mixture of aqueous phase and liquid condensates is from 1 to 10 ppm.

7. The process according to any one of claims 1 to 6, wherein the coagulant and a flocculent are further contacted with the one or several aqueous phase(s) recovered from step c), said flocculent being chosen among ammonium sulfate or Iron (III) chloride.

8. The process according to any one of claims 1 to 7, wherein the aqueous phase comprises dehydration solvents, such as methyl ethyl glycol or triethylene glycol.

9. The process according to any one of claims 3 to 8, wherein the process further comprises recovery and mercury removal treatment of the gaseous hydrocarbon stream(s), thereby recovering a treated gaseous hydrocarbon stream comprising less than less than 10 ppbwt of mercury in any form (elemental or particulate), in particular less than 5 ppbwt of mercury in any form.

10. The process according to any one of claims 1 to 9, wherein the aqueous phase recovered at step f) contains less than 20 ppbwt of mercury in any form (elemental or particulate), in particular less than 10 ppbwt of mercury in any form.

11. The process according to any one of claims 1 to 10, wherein the process further comprises the drying of the mercury-containing aggregates recovered at step f) into a mercury-concentrated dry residue, in particular by precoat filtration with dry extraction of the cake, press filtration or centrifugation.

12. The process according to any one of claims 1 to 11, wherein the process further comprises the removal of dissolved hydrocarbons from the aqueous phase(s) recovered at step f), followed by precipitation of salts, thereby recovering a treated aqueous phase containing less than 20 ppbwt of mercury in any form (elemental or particulate), in particular less than 10 ppbwt of mercury in any form.

13. The process according to any one of claims 1 to 12, wherein when the aqueous phase comprises dehydration solvents, the process further comprises a step of regeneration of said dehydration solvents from the treated aqueous phase.

14. The process according to any one of claims 1 to 13, wherein the process further comprises the mercury removal treatment of the liquid condensates recovered at step d), in particular by contacting said liquid condensates with a mercury adsorbent, preferably with a macro porous alumina supported metal sulphide, thereby recovering a treated liquid condensates containing less than 10 ppbwt of mercury in any form (elemental or particulate), in particular less than 5 ppbwt of mercury in any form.

15. A facility for treating a mercury-containing liquid effluent from a gas well, said liquid effluent comprising a mixture of an aqueous phase and liquid condensates, said facility comprising:
a) a supply line (1) for the mixture of aqueous phase and liquid condensates;
b) a reservoir (2) containing a coagulant able to form hydrophilic aggregates with mercury-containing compounds;
c) one or several separator(s) (4a, 4b, 4c, 4d, 25) in series, having a filling line (5a, 5b, 5c, 27) for the recovery of an aqueous phase comprising aggregates, a filling line (6a, 6b, 6c, 6d, 26) for the recovery of liquid condensates, and a filling line (31a, 31b, 31c, 31d) for the recovery of a gaseous hydrocarbon stream comprising hydrocarbons and mercury, one separator being fed with the supply line (1), the other separators being fed with liquid condensates filling line (6a, 6b, 6c, 26);
d) a supply line (3a) for the coagulant connected to the supply line (1) and possibly a supply line (3b) for the coagulant connected to at least one of the filling lines (5a, 5b, 5c, 27) ;
e) a separation system (7) fed with filling lines (5a, 5b, 5c, 27) wherein an aqueous phase is separated from the aggregates, said aqueous phase exiting by a line 8a, and said aggregates exiting by a line 9.

16. The facility according to claim 15, wherein the reservoir (2) further comprises a flocculent and a supply line (3b) for the coagulant and flocculant connected to at least one of the filling lines (5a, 5b, 5c, 27).

17. The facility according to claims 15 or 16, wherein the facility further comprises a mercury removal treatment unit fed with filling lines (31a, 31b, 31c, 31d).

18. The facility according to any one of claims 15 to 17, wherein the facility further comprises a separation unit (10), such as a precoat filtration unit, fed with line (9) wherein an aqueous phase is separated from a dry residue, said dry residue exiting by a line (11) and said aqueous phase exiting by a line (12).

19. The facility according to any one of claims 15 to 18, wherein the facility further comprises a separator (13), such as a flash drum, fed with lines (8a) and (12), wherein gaseous hydrocarbons are separated from an aqueous phase, said gaseous hydrocarbons exiting by a line (14) and said aqueous phase exiting by a line (15).

20. The facility according to any one of claims 15 to 19, wherein the facility further comprises a mercury removal treatment unit (22a, 22b) comprising a mercury adsorbent, such as a macro porous alumina supported metal sulphide, fed with the liquid condensates filling line (6d), from which a treated liquid condensates exit by line (23).
